# DEMANDE DE BREVET EUROPEEN

(11) **EP 1 279 698 A1**
(43) Date de publication de la demande: **29.01.2003**
(21) Numéro de dépôt: 02447144.3
(22) Date de dépôt: 24.07.2002
(51) Int. Cl.: C08J 11/06, C08L 19/00

(54) **Matériau enrobé à base de particules de caoutchouc vulcanisé usagé et son procédé de fabrication**

(30) Priorité: 25.07.2001 BE 200100507
(71) Demandeur: Keyeux, Jean-Claude, 4860 Pepinster (BE)
(72) Inventeur: Keyeux, Jean-Claude, 4860 Pepinster (BE)
(74) Mandataire: Claeys, Pierre

(57) **Abrégé**

Un matériau enrobé à base de particules de caoutchouc vulcanisé, usagé, comprenant un enrobage des particules à base d'au moins une matière thermoplastique, au moins une fois recyclée. Ladite invention permet de recycler à la fois des particules de caoutchouc vulcanisé usagé, issu des pneumatiques usagés des ménages ou des déchets de la production de pneus, et des matières thermoplastiques issues par exemples des bouteilles alimentaires, flacons de détergent, pare-chocs de voiture, ...

## Description

La présente invention est relative à un granulat à base de particules de caoutchouc vulcanisé usagé.

Ces dernières années, le recyclage s'est imposé comme une solution d'avenir. Il permet, en effet, de reconditionner des produits possédant un fort potentiel énergétique tout en évitant de les incinérer, supprimant ainsi les rejets de CO₂ qui découlent de la combustion.

Néanmoins, certaines matières produites, en très grande quantité, comme les caoutchoucs vulcanisés des pneus, sont de par leur nature difficilement recyclables. Ces matières subissent, en effet, d'importantes restructurations moléculaires lors de la vulcanisation qui empêchent toute réversibilité de leur état.

D'autres matières, comme les thermoplastiques, bien qu'ayant un état réversible, sont produites en telle quantité que les filières actuelles de recyclage ne sont pas suffisantes pour en absorber et en reconditionner toute la production.

De plus, les techniques de recyclage, du fait de la diversité des produits au sein d'un même groupe de matières, sont extrêmement difficiles à maîtriser et à mettre en oeuvre.

L'invention a donc pour but de présenter une solution à ce problème, en permettant le recyclage de deux groupes de matières : les caoutchoucs vulcanisés usagés et les matières thermoplastiques, de manière à proposer un nouveau produit composé de matériaux issus d'une manière prépondérante, de préférence totalement, du recyclage. Dans ce but, elle prévoit aussi un procédé de fabrication de ce nouveau produit.

Pour résoudre ces problèmes, il est prévu, suivant l'invention, un granulat à base de particules de caoutchouc vulcanisé, usagé, comprenant un enrobage des particules à base d'au moins une matière thermoplastique, au moins une fois recyclée. Ladite invention permet donc de recycler à la fois des particules de caoutchouc vulcanisé usagé, issu des pneumatiques usagés des ménages ou des déchets de la production de pneus, et des matières thermoplastiques issues par exemples des bouteilles alimentaires, flacons de détergent, pare-chocs de voiture, ...

Ce granulat, une fois produit, pourra servir par exemple de matière première de moulage d'objets tels que des tuiles ou de matière première pour des objets laminés tels que des panneaux d'insonorisation.

Suivant une forme de réalisation de l'invention, le granulat comprend un composant ajustant un indice de fluidité de ladite au moins une matière thermoplastique servant à l'enrobage.

Lesdites matières thermoplastiques, issues du recyclage, ont des qualités et des caractéristiques variables car elles proviennent de déchets issus de différentes productions et produits. Cette hétérogénéité de produit, lorsqu'elle n'est pas contrôlée et régulée, introduit inévitablement des variations sur la qualité de la fabrication de granulat. Ledit composant, ajustant l'indice de fluidité, permet de garantir au produit une qualité constante malgré les variations de l'indice de fluidité desdites matières thermoplastiques.

A titre de composant ajustant l'indice de fluidité, on peut prévoir un composé issu d'une réaction d'au moins un peroxyde, par exemple du peroxyde de basoyle, avec ladite au moins une matière thermoplastique. Comme autre type de composant ajustant l'indice de fluidité on peut envisager par exemple une huile minérale. Avantageusement cette huile minérale sera préalablement épongée par un mélange maître absorbant qui peut être saturé jusqu'à 25 %.

Les matières thermoplastiques recyclées peuvent être par exemple des matières thermoplastiques, en particulier des homopolymères et copolymères polyoléfiniques et leurs mélanges, les homopolymères et copolymères de propylène et leurs mélanges.

Le caoutchouc vulcanisé, recyclé, peut avantageusement être à base d'un mélange de gomme naturelle et de gomme synthétique qui a été vulcanisé. Il est évidemment important de veiller à maintenir une proportion constante entre ces deux types de gommes en fonction de la provenance du caoutchouc utilisé.

Les caoutchoucs sont préalablement broyés jusqu'à une taille de particules inférieure à 2 mm, avantageusement de 0,5 à 1 mm.

Suivant une forme de réalisation avantageuse de l'invention le granulat comprend 40 à 50 % en poids de particules de caoutchouc vulcanisé usagé et 55 à 45 % en poids de ladite au moins une matière thermoplastique, le restant étant formé d'un pourcentage d'adjuvant et produit de dégradation. Comme adjuvants, on peut par exemple envisager, outre un composant ajustant l'indice de fluidité, des stabilisants aux U.V., des colorants, des agents rendant le matériau résistant au feu, etc.

Avantageusement la densité du granulat obtenu varie entre 0,9 et 1,4 kg par dm³.

Lesdits granulats pourront, suivant l'invention, être fabriqués par un procédé tel que décrit ci-dessous. Ladite matière thermoplastique issue du recyclage, par exemple de bouteilles alimentaires, est chauffée et ramollie de manière à avoir une matière plus homogénéisable. Le chauffage permet, en effet, au moins à une partie des polymères ou copolymères de la matière thermoplastique de retourner à l'état fluide, ce qui favorisera les contacts avec lesdites particules de caoutchouc vulcanisé.

Ladite matière thermoplastique, une fois chauffée est introduite dans un dispositif de mélange, par exemple une extrudeuse. Par après, on y introduit lesdites particules de caoutchouc vulcanisé usagé. Lesdites particules de caoutchouc usagé vont alors être enrobées durant le malaxage et vont subir ensuite, à la sortie du dispositif de mélange, une granulation.

Suivant un mode perfectionné de réalisation de l'invention, le chauffage de ladite au moins une matière thermoplastique est effectué à une température supérieure à sa fluidification et en ce que le mélange entre ladite au moins une matière thermoplastique et les particules de caoutchouc a lieu à une température inférieure à la température de carbonisation du caoutchouc.

D'autres formes de réalisation de granulat et du procédé de fabrication sont indiquées dans les revendications annexées.

L'invention va à présent être décrite de manière plus détaillée à l'aide d'un exemple de réalisation non limitatif.

### Exemple

On utilise des particules de caoutchouc vulcanisé usagé issues de pneus de voiture automobile déchiquetés, broyés et tamisés de manière à obtenir des particules ayant une taille comprise entre 0,5 et 1 mm. Des pneus de voiture ayant une composition (déterminée...) permettant la réalisation de cet exemple.

Comme matières thermoplastiques on utilise du polypropylène issu de pare-chocs de voiture déchiquetés, conditionnés sous forme de paillettes.

Les paillettes à concurrence de 50 % en poids du futur mélange sont chauffées à une température de 210°C pendant un temps déterminé suivant la puissance de chauffe utilisée, dans un fourreau muni de résistances chauffantes et d'une vis mélangeuse. L'indice de fluidité est alors contrôlé à la sortie du fourreau. Dans le cas où cet indice de fluidité est inférieur à 10, une addition d'huile minérale, par exemple de 2 % en poids, est faite à la matière thermoplastique chauffée.

De même, les composants colorants et ignifugeants, dans ce cas-ci 1 % en poids de noir de carbone, et des composants ignifugeants, dans ce cas-ci 2 % en poids de gamma-mélamine, sont additionnés à la matière thermoplastique chauffée.

Ensuite, les particules de caoutchouc vulcanisé usagé sont déversées à concurrence de 45 % en poids du mélange dans la trémie permettant l'accès au fourreau, dont la température est alors maintenue inférieure à 210°C de manière à ne pas risquer de carboniser les particules de caoutchouc vulcanisé usagé.

Le mélange est ensuite passé dans un granulateur. Le granulat ainsi obtenu aura une densité de 1 kg/dm³ et conviendra particulièrement bien comme matériau pour effectuer un moulage, d'objets tels que des tuiles, des panneaux de recouvrement, etc.

Il doit être entendu que la présente invention n'est en aucune façon limitée à la forme de réalisation décrite ci-dessus et que bien des modifications peuvent y être apportées sans sortir du cadre des revendications annexées.

## Revendications

1. Granulat à base de particules de caoutchouc vulcanisé usagé, **caractérisé en ce qu'**il comprend un enrobage des particules à base d'au moins une matière thermoplastique, recyclée au moins une fois.

2. Granulat suivant la revendication 1, **caractérisé en ce qu'**il comprend un composant ajustant un indice de fluidité de ladite au moins une matière thermoplastique servant à l'enrobage.

3. Granulat suivant la revendication 2, **caractérisé en ce qu'**il comprend à titre de composant ajustant l'indice de fluidité un composé issu d'une réaction d'au moins un peroxyde avec ladite au moins une matière thermoplastique.

4. Granulat suivant la revendication 2, **caractérisé en ce que** ledit composé ajustant un indice de fluidité de ladite au moins une matière thermoplastique est une huile minérale.

5. Granulat suivant la revendication 2, **caractérisé en ce que** ladite au moins une matière thermoplastique est choisie parmi le groupe constitué des homopolymères et copolymères polyoléfiniques et de leur mélange.

6. Granulat suivant la revendication 5, **caractérisé en ce que** ladite matière thermoplastique est choisie parmi le groupe constitué des homopolymères et copolymères à base de propylène et de leur mélange.

7. Granulat suivant l'une des revendications 1 à 6, **caractérisé en ce que** lesdites particules de caoutchouc vulcanisé usagé ont un diamètre inférieur à 2 mm.

8. Granulat suivant l'une des revendications 1 à 7, **caractérisé en ce que** le granulat comprend 40 à 50 % en poids de particules de caoutchouc vulcanisé usagé et 55 à 45 % en poids de ladite au moins une matière thermoplastique, le restant étant formé d'un pourcentage d'adjuvant et de produit de dégradation.

9. Granulat suivant l'une des revendications 1 à 8, **caractérisé en ce qu'**il comprend au moins un adjuvant choisi parmi le groupe constitué des composés stabilisateurs UV, des composés antioxydants, des composés ignifugeants, des composés plastifiants, des composés colorants et de leur mélange.

10. Procédé de fabrication de granulat à base de particules de caoutchouc vulcanisé usagé, lequel comprend les étapes suivantes :
- chauffage d'au moins une matière thermoplastique, au moins une fois recyclée,
- introduction dans un dispositif de mélange de ladite au moins une matière thermoplastique,
- introduction dans ledit dispositif de mélange desdites particules de caoutchouc vulcanisé usagé, avec enrobage de ces dites particules par ladite matière thermoplastique chauffée, et
- granulation des particules de caoutchouc vulcanisé usagé, enrobées.

11. Procédé de fabrication de granulat à base de particules de caoutchouc vulcanisé usagé suivant la revendication 10, lequel comprend en outre :
- une vérification de la viscosité de ladite au moins une matière thermoplastique, au moins une fois recyclée, chauffée, et
- un ajout de composant ajustant l'indice de fluidité destiné à maintenir une viscosité constante de ladite matière thermoplastique, une fois chauffée.

12. Procédé de fabrication de granulat à base de particules de caoutchouc vulcanisé usagé suivant l'une des revendications 10 et 11 comprenant une extrusion en granulé desdites particules de caoutchouc vulcanisé usagé enrobées de ladite au moins une matière thermoplastique.

13. Procédé de fabrication de granulat à base de particules de caoutchouc vulcanisé usagé suivant l'une des revendications 10 et 11, **caractérisé en ce qu'**il comprend un passage desdites particules de caoutchouc vulcanisé usagé enrobées de ladite au moins une matière thermoplastique au travers d'une filière.

14. Procédé suivant l'une quelconque des revendications 10 à 13, **caractérisé en ce que** le chauffage de ladite au moins une matière thermoplastique est effectué à une température supérieure à sa fluidification et **en ce que** le mélange entre ladite au moins une matière thermoplastique et les particules de caoutchouc a lieu à une température inférieure à la température de carbonisation du caoutchouc.
